# EUROPEAN PATENT APPLICATION

(11) **EP 3 032 080 A1**
(43) Date of publication of application: **15.06.2016**
(21) Application number: 15176803.3
(22) Date of filing: 15.07.2015
(51) Int. Cl.: F02D 41/22, F02P 5/152, F02M 26/49, F02M 26/22

(54) **CONTROL METHOD FOR EXHAUST GAS RECIRCULATION SYSTEM**

(30) Priority: 09.12.2014 KR 20140175962
(71) Applicant: Hyundai Motor Company, Seoul 137-938 (KR)
(72) Inventor: Ryu, In Sang, 445-130 Gyeonggi-do (KR); Suh, In Gee, 446-913 Gyeonggi-do (KR); Ha, Kyoung Pyo, 133-100 Seoul (KR); Kim, Back Sik, 447-010 Gyeonggi-do (KR); Kwon, Ki Young, 446-916 Gyeonggi-do (KR)
(74) Representative: Hoffmann Eitle

(57) **Abstract**

A method for controlling an EGR system includes determining whether diagnosis conditions for an EGR cooler are satisfied while the EGR system operates. The EGR system is turned off when the diagnosis conditions for the EGR cooler are satisfied and a retard amount of ignition timing is larger than a first reference value. The EGR cooler is diagnosed base on a comparison result of the retard amount of the ignition timing and a second reference value while the EGR system is off.

## Description

### TECHNICAL FIELD

The present disclosure generally relates to a method for controlling an exhaust gas recirculation (EGR) system that can control the EGR system by diagnosing an EGR cooler.

### BACKGROUND

A vehicle is equipped with an external exhaust gas recirculation (EGR) system capable of reducing the amount of nitrogen oxide (NOx) and a loss of air pumping energy, thus improving fuel efficiency.

The EGR system generally comprises an EGR cooler, an EGR valve, and an EGR pipe. If a high-temperature exhaust gas enters the EGR system, durability of the EGR valve or other parts decrease or damage occurs due to high temperature of the exhaust gas. Further, the amount of NOx increased. Thus, the EGR system cools an EGR gas through the EGR cooler and then supplied to a combustion chamber.

The EGR cooler reduces the amount of NOx by decreasing the temperature of the EGR gas, and an oil cooler cools the temperature of oil to maintain at a predetermined level.

The oil cooler uses a coolant (antifreeze) to control the temperature of fluid or gas by exchanging heat with (heating and cooling) the fluid or gas. In particular, the coolant of the oil cooler maintains the oil temperature at an appropriate level for operating an engine. Further, an engine oil is used for dynamic friction parts which require lubrication, such as an oil pump, a cylinder block, pistons, and a crankshaft. However, when the temperature of the oil is low, friction of the dynamic friction parts increases by high dynamic viscosity. Accordingly, by rapidly increasing the temperature of cold oil while a vehicle is driven, friction force is reduced, thus improving fuel efficiency of the vehicle.

The EGR cooler uses a coolant to primarily decrease the temperature of the EGR gas by absorbing high-temperature heat of the EGR gas and to secondarily increase the temperature of the oil of the oil cooler by sending the oil into the oil cooler and then transferring the high-temperature heat to the oil.

As factors for diagnosing the EGR system, at present, clogging of an EGR valve, an error of a flow rate, and valve leakage etc. are used. When an EGR cooler fouling occurs on its surface by carbon etc., the temperature at an outlet of the EGR cooler increases and an EGR gas is insufficiently cooled, thus generating severe knocking in the combustion chamber. Further, fuel is recognized as low-octane fuel due to the severe knocking and a default ignition timing is retarded and reset. Thus, there is a need for a method for controlling ignition timing by exactly determining the occurrence of knocking.

A device for determining a problem in an exhaust gas recirculation device has been disclosed in a related art. According to the related art, a controller calculates a retard amount in accordance with whether it is an EGR period or not on the basis of a knock detection signal from a knock sensor. The controller then determines whether there is a problem in an EGR system based on a difference between the calculated retard amount in the EGR period and the calculated retard amount not in the EGR period.

The foregoing is intended merely to aid in the understanding of the background of the present disclosure, and is not intended to mean that the present disclosure falls within the purview of the related art that is already known to those skilled in the art.

### SUMMARY

The present disclosure has been made keeping in mind the above problems occurring in the related art and proposes a method for controlling an EGR system based on determination of whether knocking occurs due to an EGR cooler.

According to an exemplary embodiment of the present inventive concept, a method for controlling an exhaust gas recirculation (EGR) system includes determining whether diagnosis conditions for an EGR cooler are satisfied while the EGR system operates. The EGR system is turned off when the diagnosis conditions for the EGR cooler are satisfied and a retard amount of ignition timing is larger than a first reference value. The EGR cooler is diagnosed based on a comparison result of the retard amount of the ignition timing and a second reference value while the EGR system is off.

The method may further include determining whether operation conditions of the EGR system are satisfied, before the step of determining whether the diagnosis conditions for the EGR cooler are satisfied.

The step of determining whether the operation conditions of the EGR system are satisfied may include determining whether all of a coolant temperature, a vehicle speed, a battery voltage, an elapsed time after an engine starts, the amount of air, and the number of revolutions are satisfied.

The step of determining whether the diagnosis conditions for the EGR cooler are satisfied may include determining whether a correction value of the ignition timing is larger than a critical value while the EGR system operates.

The first reference value may be an allowable maximum retard amount when the EGR system operates.

The second reference value may be an allowable maximum retard amount when the EGR system does not operate.

The retard amount of the ignition timing while the EGR system is off may be calculated after a predetermined period of time elapses from which the EGR system is turned off.

In the step of diagnosing the EGR cooler, when the retard amount of the ignition timing while the EGR system is off is smaller than the second reference value, it may be determined that the EGR cooler does not operate normally.

In the step of diagnosing the EGR cooler, when the retard amount of the ignition timing while the EGR system is off is larger than the second reference value, it may be determined that the EGR cooler operates normally.

The method may further include disabling the EGR system, when it is determined that the EGR cooler does not operate normally.

The method may further include determining whether operation conditions of the EGR system are satisfied when it is determined that the EGR cooler does not operate normally, and operating the EGR system when the operation conditions of the EGR system are satisfied.

In the related art, when there is a problem with efficiency of an EGR cooler, knocking is generated every time an EGR system starts and ignition timing is largely retarded. Further, when the ignition timing is largely retarded according to the related art, fuel efficiency.

However, according to the present disclosure, a vehicle can drive while an EGR system is off, thus improving drivability and fuel efficiency with a normal ignition timing.

### BRIEF DESCRIPTION OF THE DRAWINGS

The above and other objects, features and other advantages of the present disclosure will be more clearly understood from the following detailed description when taken in conjunction with the accompanying drawings.
FIG. 1 is a flowchart illustrating a method for controlling an EGR system according to an embodiment of the present inventive concept.
FIGS. 2A and 2B are diagrams showing differences in ignition timing according to on/off of EGR systems according to the related art and the present disclosure.

### DETAILED DESCRIPTION

Specific structural and functional descriptions of embodiments of the present inventive concept disclosed herein are only for illustrative purposes of the embodiments of the present inventive concept. The present inventive concept may be embodied in many different forms without departing from the spirit and significant characteristics of the present inventive concept. Therefore, the embodiments of the present inventive concept are disclosed only for illustrative purposes and should not be construed as limiting the present inventive concept.

Reference will now be made in detail to various embodiments of the present inventive concept, specific examples of which are illustrated in the accompanying drawings and described below, since the embodiments of the present inventive concept can be variously modified in many different forms. While the present inventive concept will be described in conjunction with exemplary embodiments thereof, it is to be understood that the present description is not intended to limit the present inventive concept to those exemplary embodiments. On the contrary, the present inventive concept is intended to cover not only the exemplary embodiments, but also various alternatives, modifications, equivalents, and other embodiments that may be included within the spirit and scope of the present inventive concept as defined by the appended claims.

It will be understood that, although the terms "first," "second," etc. may be used herein to describe various elements, these elements should not be limited by these terms. These terms are only used to distinguish one element from another element. For instance, a first element discussed below could be termed a second element without departing from the teachings of the present inventive concept. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between," "directly between," "adjacent to," or "directly adjacent to," should be construed in the same way.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprise," "include," "have," etc. when used in this specification, specify the presence of stated features, integers, steps, operations, elements, components, and/or combinations of them but do not preclude the presence or addition of one or more other features, integers, steps, operations, elements, components, and/or combinations thereof.

Unless otherwise defined, all terms including technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinbelow, exemplary embodiments of the present inventive concept will be described in detail with reference to the accompanying drawings. Throughout the drawings, the same reference numerals will refer to the same or like parts.

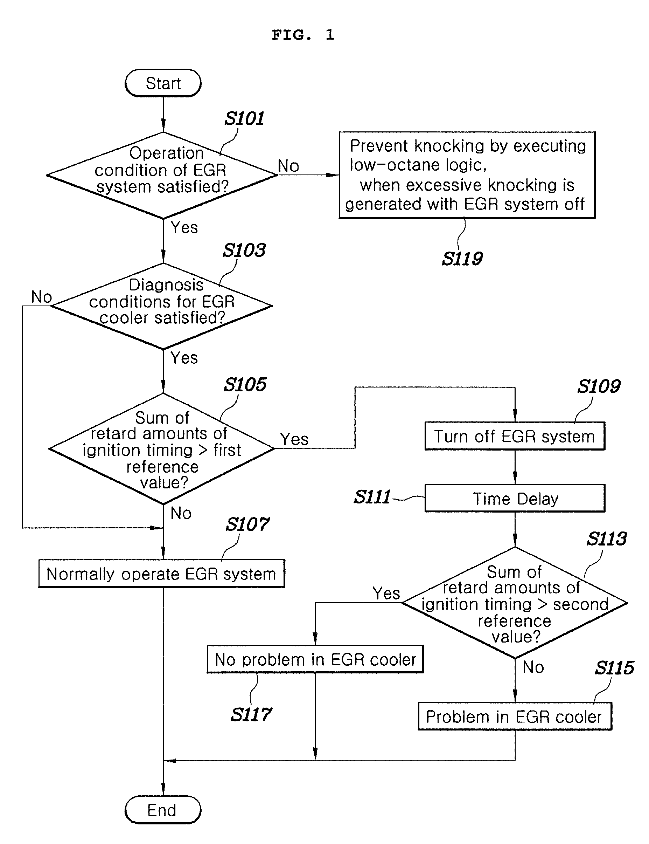

FIG. 1 is a flowchart illustrating a method for controlling an EGR system according to an embodiment of the present inventive concept. A method for controlling an EGR system according to an embodiment of the present inventive concept may include determining whether operation conditions of the EGR system are satisfied (S101) before determining whether diagnosis conditions for an EGR cooler are satisfied. Whether the EGR cooler is operated with the EGR system in operation is determined (S103). A retard amount of ignition timing is compared with a first reference value when the diagnosis conditions for the EGR cooler are satisfied (S105). The EGR system is turned off when the retard amount of ignition timing is larger than the first reference value (S109). The retard amount of ignition timing is compared with a second reference value when the EGR system is off (S113). The EGR cooler is diagnosed based on a comparing result (S115 and S117).

The step of determining whether the operation conditions of the EGR system are satisfied may determine whether all of a coolant temperature, a vehicle speed, a battery voltage, the elapsed time after an engine starts, the amount of air, and the number of revolutions are satisfied. The factors for the operation conditions are used to operate the EGR system when they are satisfied. The EGR system is not operated, unless any one of the factors is satisfied.

The EGR system can be operated, only when the operation conditions of the EGR system are satisfied. Whether the EGR system can be operated is determined first. Then, after it is determined that the EGR system can be operated, the EGR cooler is diagnosed while operating the EGR system. However, when there is little difference in ignition timings while the EGR system is operated, there is no need for diagnosing the EGR cooler. Thus, only when there is a large difference in the ignition timings while operating the EGR system, it is determined whether the EGR system can be operated. Accordingly, the step of determining whether the diagnosis conditions for the EGR cooler are satisfied determines whether there is a need for diagnosing the EGR cooler by determining whether a corrective value of ignition timing is larger than a predetermined critical value (for example, 15 degrees) while the EGR system is operated.

When the operation conditions of the EGR system are not satisfied, a predetermined low-octane logic can be separately executed if there is severe knocking (S119). The low-octane logic is provided for setting a default ignition timing by determining that fuel is low-octane fuel and adding ignition timing offset (for example, -6 degrees), when learned intensity of knocking is maintained at a predetermined maximum.

When the corrective value of the ignition timing is larger than the critical value, the EGR cooler needs to be diagnosed. On the other hand, when the corrective value of the ignition timing is smaller than the critical value, the EGR does not need to be diagnosed, so that the EGR system is operated normally.

In the step of diagnosing the EGR cooler, the retard amount of the ignition timing is compared with the first reference value. When the retard amount of the ignition timing is larger than the first reference value, the EGR system is turned off. Further, the retard amount of the ignition timing is compared with the second reference value with the EGR system off (S113), and the diagnosing is performed on the basis of the comparing result. The retard amount of the ignition timing while the EGR system operates is calculated after a predetermined time is elapsed since the EGR system is turned off (S111), because the knocking is generated while the EGR system operates and accordingly the retard amount of the ignition timing while the EGR system is off is larger than the second reference value. Accordingly, it is required to check the retard amount of ignition timing in a predetermined time (for example, 10 sec) in consideration of the returning time of the ignition timing.

The first reference value is the allowable maximum retard amount when the EGR system is operated, and the second reference value is the allowable maximum retard amount when the EGR system is not operated. The critical retard amounts, with the EGR system in operation and off, may be set different.

The retard amount of the ignition timing of the EGR system may be the sum of a learned retard amount and a global adaptation retard amount. When the retard amount of the ignition timing is move than the first reference value or the second reference value due to knocking, it may be determined that more intensive knocking than allowable knocking has been generated. The learned retard amount can be calculated from a predetermined table and used as the actual ignition timing by adding it to the default ignition timing.

When diagnosing a problem in the EGR cooler while the retard amount of the ignition timing with the EGR system off is smaller than the second reference value, it is possible to determine that there is a problem in the EGR cooler (S115). Alternatively, when the retard amount of the ignition timing with the EGR system off is larger than the second reference value, it is possible to determine that there is no problem in the EGR cooler(S117).

When it is determined that the EGR cooler does not operate normally, the EGR system may be powered off or disabled, or a breakdown lamp may be turned on. On the other hand, when it is determined that there is no problem in the EGR cooler, it may be possible to determine again whether the operation conditions of the EGR system are satisfied, and when the operation conditions of the EGR system are satisfied, it may be possible to operate the EGR system.

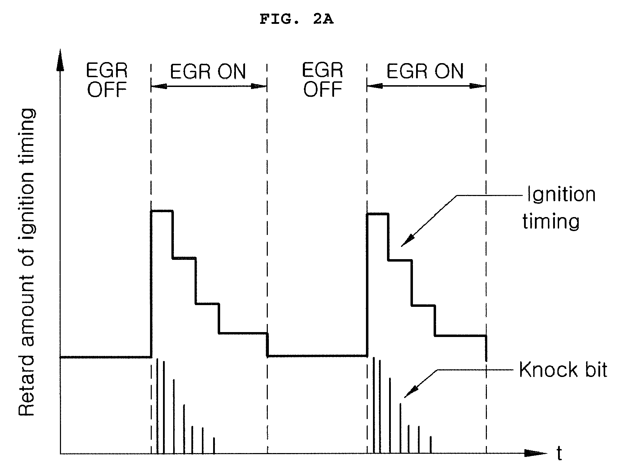

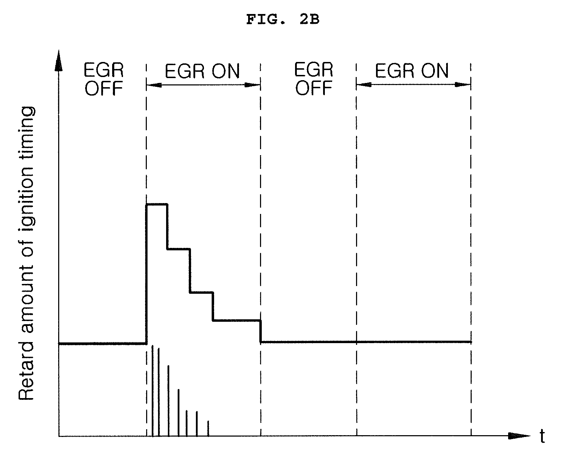

FIGS. 2A and 2B are diagrams showing differences in ignition timing according to on/off of EGR systems according to the related art and the present disclosure, respectively.

FIG. 2A shows a difference in retard amount of ignition timing to time for diagnosing deterioration of the efficiency of an EGR cooler when an EGR system is in operation and off according to the related art.

It can be seen from the figure that knocking is generated every time the EGR system operates, because the EGR cooler is not diagnosed in the related art. Although there may be various factors decreasing efficiency of the EGR cooler, the efficiency is reduced when fouling of the EGR cooler occurs, thus deteriorating drivability of a vehicle.

FIG. 2B shows a difference in retard amount of ignition timing to time for diagnosing deterioration of the efficiency of an EGR cooler when an EGR system is in operation and off according to the present disclosure.

According to the present disclosure, when it is determined that an EGR cooler has a problem as a result of diagnosing the EGR cooler, even though operation conditions of an EGR system are satisfied, subsequent knocking is prevented by turning off the EGR system as shown FIG. 2B. Therefore, drivability of a vehicle is improved and the ignition timing is controlled normally, thus improving fuel efficiency while the EGR system is off.

Although the embodiment of the present inventive concept has been described for illustrative purposes, those skilled in the art will appreciate that various modifications, additions, and substitutions are possible, without departing from the scope and spirit of the disclosure as disclosed in the accompanying claims.

## Claims

1. A method for controlling an exhaust gas recirculation (EGR) system, the method comprising steps of:
determining whether diagnosis conditions for an EGR cooler are satisfied while the EGR system operates;
turning off the EGR system, when the diagnosis conditions for the EGR cooler are satisfied and a retard amount of ignition timing is larger than a first reference value; and
diagnosing the EGR cooler by comparing the retard amount of the ignition timing with a second reference value while the EGR system is turned off.

2. The method of claim 1, further comprising a step of:
determining whether operation conditions of the EGR system are satisfied, before the step of determining whether the diagnosis conditions for the EGR cooler are satisfied.

3. The method of claim 2, wherein the step of determining whether the operation conditions of the EGR system are satisfied includes determining whether all of a coolant temperature, a vehicle speed, a battery voltage, an elapsed time after an engine starts, an amount of air, and an engine revolutions per minute (RPM) are satisfied.

4. The method of any one of the preceding claims, wherein the step of determining whether the diagnosis conditions for the EGR cooler are satisfied includes determining whether a corrective value of the ignition timing is larger than a critical value while the EGR system operates.

5. The method of any one of the preceding claims, wherein the first reference value is an allowable maximum retard amount when the EGR system operates.

6. The method of any one of the preceding claims, wherein the second reference value is an allowable maximum retard amount when the EGR system does not operate.

7. The method of any one of the preceding claims, wherein the retard amount of the ignition timing while the EGR system is off is calculated after a predetermined period of time elapses from which the EGR system is turned off.

8. The method of any one of the preceding claims, wherein in the step of diagnosing the EGR cooler, when the retard amount of the ignition timing while the EGR system is off is smaller than the second reference value, it is determined that the EGR cooler does not operate normally.

9. The method of any one of the preceding claims, wherein in the step of diagnosing EGR cooler, when the retard amount of the ignition timing while the EGR system is off is larger than the second reference value, it is determined that the EGR cooler operates normally.

10. The method of claim 8, further comprising a step of:
disabling the EGR system, when it is determined that the EGR cooler does not operate normally.

11. The method of claim 9, further comprising a step of:
determining whether operation conditions of the EGR system are satisfied when it is determined that the EGR cooler operates normally, and operating the EGR system when the operation conditions of the EGR system are satisfied.

12. The method of any one of the preceding claims, further comprising a step of:
executing a low-octane logic when the operation conditions of the EGR system are not satisfied, after the step of determining whether the diagnosis conditions for the EGR cooler are satisfied.
